# FASCICULE DE BREVET EUROPEEN

(11) **EP 1 900 958 B1**
(45) Date de publication et mention de la délivrance du brevet: **27.05.2009**
(21) Numéro de dépôt: 07113675.8
(22) Date de dépôt: 02.08.2007
(51) Int. Cl.: F16D 41/06, F16H 55/36

(54) **Dispositif de poulie débrayable.**
Vorrichtung mit ausrückbarer Riemenscheibe
Disconnectable pulley device.

(30) Priorité: 15.09.2006 FR 0608080
(43) Date de publication de la demande: 19.03.2008
(73) Titulaire: Aktiebolaget SKF, 415 50 Göteborg (SE)
(72) Inventeur: Barraud, Pierre-Julien, 03000, Avernes (FR); Descombes, Michel, 78000, VERSAILLES (FR)
(74) Mandataire: de Kernier, Gabriel

(56) Documents cités:
- DE-A1- 19 843 946
- US-B1- 6 237 736

## Description

L'invention concerne le domaine des roues libres et plus particulièrement celui des poulies débrayables équipées de telles roues libres utilisées par exemple dans les poulies d'entraînement des alternateurs dans un véhicule automobile.

Les poulies débrayables sont connues en elles-mêmes et sont de plus en plus utilisées pour remédier aux effets néfastes des acyclismes ou décélérations soudaines du moteur qui surviennent dans les moteurs à explosion, en particulier à bas régime et surtout dans les moteurs Diesel. La courroie d'entraînement, qui est entraînée par le moteur par l'intermédiaire de la poulie de vilebrequin décélère brutalement alors que la poulie menée, par exemple la poulie de l'alternateur, a tendance, par inertie, à continuer à tourner à la même vitesse. Dans le cas d'un accouplement rigide entre la poulie et l'arbre d'alternateur, la courroie est soumise à des contraintes très importantes lors de ces variations de vitesse instantanées avec des effets néfastes tels qu'une fatigue anormale de la courroie avec des risques de rupture, un glissement de la courroie sur la poulie ou encore une vibration des brins de courroie entre les poulies. On a donc cherché à atténuer ces phénomènes en incorporant entre la poulie menée et l'arbre mené une roue libre qui permet de désaccoupler temporairement la poulie de l'arbre en cas de décélération brutale de la poulie. De telles poulies débrayables sont connues notamment par les documents US 6 237 736 et JP 8 166 027 et comportent généralement deux roulements, disposés de chaque côté de la poulie et une roue libre disposée entre les deux roulements.

La demanderesse s'est aperçue qu'il existait un besoin d'une poulie débrayable compacte, étanche, de structure modulaire, dont les composants soient économiques à fabriquer et à assembler et dans laquelle il serait possible de lubrifier différemment le roulement et la roule libre.

Le dispositif de poulie débrayable comprend une poulie montée sur un élément intérieur de transmission au moyen d'un palier à roulement et d'une roue libre destinée à assurer un embrayage unidirectionnel entre la poulie et l'élément intérieur de transmission. Le palier à roulement comporte deux rangées contigües d'éléments roulants disposés d'un même côté de la poulie. La roue libre est disposée axialement à l'extérieur des rangées d'éléments roulants, du côté de la poulie opposée à celui comportant les deux rangées d'éléments roulants. On peut ainsi disposer axialement les rangées d'éléments roulants à l'emplacement le plus adéquat pour la reprise des efforts radiaux, d'où un possible allégement des pièces.

Dans un mode de réalisation, les éléments roulants sont des billes.

Dans un mode de réalisation, la roue libre est du type à cames engageantes.

Dans un mode de réalisation, l'élément intérieur de transmission, par exemple un arbre, présente un profil extérieur cylindrique au moins en dehors de la zone de chemins de roulement intérieurs pour les éléments roulants. La fabrication d'un tel élément intérieur de transmission est particulièrement économique.

Dans un mode de réalisation, les chemins de roulement du côté intérieur sont ménagés directement dans l'élément intérieur de transmission, par exemple un arbre.

Dans un mode de réalisation, les chemins de roulement du côté extérieur sont ménagés directement dans la poulie.

Dans un mode de réalisation, le chemin intérieur de portée des cames est ménagé sur l'élément intérieur de transmission.

Dans un mode de réalisation, l'élément intérieur de transmission comprend un arbre.

Dans un mode de réalisation, le chemin de portée des cames du côté extérieur est ménagé dans la poulie.

Dans un mode de réalisation, la poulie est munie d'un alésage cylindrique dans lequel est emmanchée une bague extérieure de palier à roulement.

Dans un mode de réalisation, les chemins de roulement sont localisés axialement au niveau d'une zone de contact d'une surface extérieure de la poulie avec une courroie. La zone de contact correspond ainsi à une zone soumise à une charge radiale une fois la courroie mise en place. On réduit ainsi les charges obliques s'exerçant sur le roulement, d'où un accroissement de sa durée de vie.

Dans un mode de réalisation, l'espace dans lequel sont situés les chemins de roulement est isolé de façon étanche de l'espace dans lequel est situé la roue libre. Un joint d'étanchéité peut-être disposé entre lesdits espaces. Les chemins de roulement et la roue libre sont ainsi isolés l'un de l'autre par interdiction de la communication de liquides, totale ou presque totale.

Avantageusement, le lubrifiant utilisé pour les éléments roulants est différent de celui utilisé pour la roue libre. Le mélange de tels lubrifiants est ainsi très réduit.

Le dispositif de poulie débrayable peut-être monté sur un arbre d'alternateur en vue de l'entraînement dudit alternateur. La poulie peut être montée sur un arbre central par l'intermédiaire d'un palier à roulement et d'une roue libre. L'arbre d'entraînement peut être monté sur l'arbre de l'alternateur. Une courroie d'entraînement peut venir porter sur la périphérie rainurée de la poulie de type poly-V entraînée par le moteur. Grâce à la roue libre, la poulie entraîne l'arbre central lorsque le moteur accélère ou est en régime sensiblement continu ou bien décélère très lentement. En cas de ralentissement brutal du moteur et donc de la poulie, l'axe central du dispositif de poulie débrayable peut continuer à tourner plus rapidement que la poulie proprement dite grâce à la roue libre, épargnant ainsi des contraintes excessives à la courroie d'entraînement.

Grâce à l'invention, le nombre d'éléments à fabriquer et à gérer est réduit. Il est possible d'utiliser les lubrifiants différents et spécifiquement adaptés pour le roulement d'une part et pour la roue libre d'autre part. L'ensemble est très compact. La partie roulement peut être localisée sous la zone chargée de la poulie tandis que la roue libre peut être située en dehors de cette zone. La partie roulement reprend ainsi la charge radiale tandis que la roue libre n'est pas chargée radialement mais transmet uniquement un couple unidirectionnel. L'épaisseur des pièces peut être réduite, d'où une réduction de la masse tournante, de la consommation d'énergie et de la quantité de matière utilisée.

La présente invention sera mieux comprise à la lecture de la description détaillée de quelques modes de réalisation pris à titre d'exemples nullement limitatifs et illustrés par les dessins annexés, sur lesquels :
- la figure 1 est une vue en coupe axiale d'un dispositif de poulie débrayable selon un premier mode de réalisation ;
- la figure 2 est une vue en coupe radiale selon II-II de la figure 1 ; et
- la figure 3 est une vue en coupe axiale d'un dispositif de poulie débrayable selon un deuxième mode de réalisation.

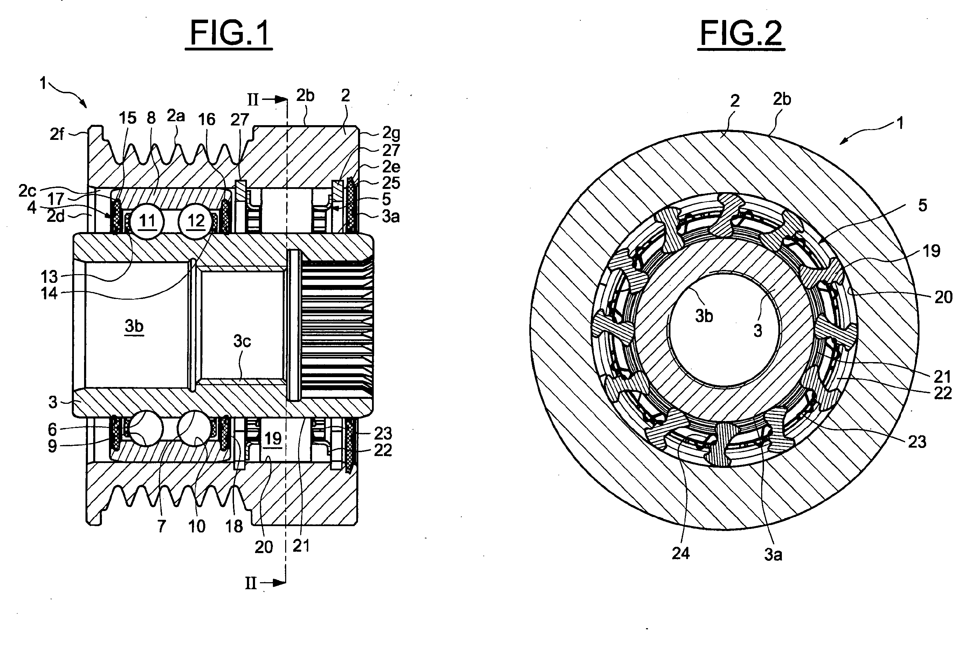

Comme on peut le voir sur les figures 1 et 2, le dispositif 1 de poulie débrayable comprend une poulie 2, un élément intérieur de transmission 3, par exemple un arbre creux, un palier à roulement 4 et une roue libre 5.

La poulie 2 présente une surface extérieure pourvue d'une zone rainurée 2a de type poly-V à rainures annulaires et une zone axiale 2b formée à une extrémité axiale de la zone rainurée 2a, un alésage cylindrique 2c s'étendant sur l'ensemble de la longueur de la poulie 2 à l'exception d'un chanfrein 2d disposé à une extrémité axiale et d'une rainure annulaire 2e disposée à l'extrémité axiale opposée de l'alésage 2c, et deux surfaces frontales radiales 2f et 2g et deux rainures annulaires disposées dans l'alésage et destinées à recevoir chacune un anneau élastique 27 de type circlips. L'élément intérieur de transmission 3 présente une surface extérieure axiale 3a cylindrique à partir de laquelle sont ménagés deux chemins de roulement 6 et 7 axialement au niveau de la zone rainurée 2a de la poulie 2. Deux chanfreins sont prévus aux extrémités de la surface extérieure axiale 3a. L'élément intérieur de transmission 3 présente également une surface intérieure 3b dont une partie 3c comporte un filetage en vue de la fixation sur l'extrémité d'un arbre d'alternateur et de l'entraînement dudit arbre (non représenté).

Le palier à roulement 4 comprend une bague extérieure 8 monobloc présentant une surface extérieure emmanchée dans l'alésage 2c de la poulie 2 et un alésage dans lequel sont ménagés deux chemins de roulement 9 et 10 axialement au niveau des chemins de roulement 6 et 7 ménagés dans la surface extérieure de l'arbre 3. Les chemins de roulement 6 et 7, 9 et 10 sont ménagés en creux par enlèvement de copeaux à partir des surfaces d'origine.

Une rangée d'éléments roulants 11, par exemple des billes, est montée entre les chemins de roulement 6 et 9. De même, une rangée d'éléments roulants 12 est montée entre les chemins de roulement 7 et 10. Les éléments roulants 11 et 12 sont respectivement maintenus à espacement circonférentiel régulier par des cages 13 et 14. Le palier à roulement 4 présente donc deux rangées d'éléments roulants. Bien entendu, on peut utiliser des éléments roulants de formes différentes, par exemple des rouleaux, cylindriques ou coniques, des aiguilles, etc. On peut également prévoir un nombre de rangées d'éléments roulants différents, par exemple une rangée de billes ou trois rangées d'éléments roulants dans le cas de charges particulièrement importantes, en particulier une rangée de rouleaux et deux rangées de billes.

Aux extrémités axiales de l'alésage de la bague extérieure 8 du palier à roulement 4, sont ménagées deux rainures annulaires 15 et 16 dans lesquelles sont montés des joints d'étanchéité 17 et 18. Les joints d'étanchéité 17 et 18 forment une étanchéité statique avec la bague extérieure 8 et une étanchéité dynamique avec l'arbre 3. L'étanchéité dynamique peut être de type à passage étroit ou encore, comme illustré sur la figure 1, à lèvres frottant sur une portée extérieure rectifiée de l'arbre 3. On assure ainsi la préservation des éléments roulants contre l'intrusion d'éléments polluants et la retenue du lubrifiant dans le palier à roulement. Le lubrifiant peut être choisi spécifiquement pour assurer le meilleur fonctionnement possible des éléments roulants. Le palier à roulement 4 en général et les rangées d'éléments roulants 11 et 12 en particulier sont disposés axialement au niveau de la zone rainurée 2a de la poulie 2 prévue pour coopérer avec une courroie d'entraînement (non représentée) mécaniquement liée au moteur d'un véhicule. Le palier à roulement 4 est donc disposé au droit de la courroie et est par conséquent particulièrement efficace pour reprendre la charge radiale due à la courroie sans provoquer de dévers et de torsion de la poulie. L'épaisseur de la poulie peut être relativement faible.

La roue libre 5 comprend une pluralité de cames 19 disposées entre deux chemins de glissement 20 et 21, de forme cylindrique de révolution. Les cames 19 sont de type « engageantes », c'est-à-dire ayant tendance, sous l'effet des forces centrifuges lors de la rotation de la roue libre, à basculer dans le sens favorisant leur contact avec les deux chemins de glissement, en vue de faciliter un passage quasi instantané du fonctionnement en roue libre au fonctionnement en prise de couple. Le chemin de glissement 20 est formé par l'alésage 2c de la poulie 2. Le chemin de glissement 21 est formé par la surface extérieure axiale 3a de l'arbre 3.

En d'autres termes, la poulie 2 peut être fabriquée avec une surface intérieure de forme particulièrement simple entièrement axiale à l'exception du chanfrein 2d d'extrémité et de la rainure 2e d'extrémité opposée. La poulie 2 peut donc être obtenue à faible prix de revient. Du côté opposé, le chemin de glissement 21 est formé sur la surface extérieure 3a de l'arbre 3. Le profil extérieur de révolution de l'arbre 3 qui possède le même diamètre sur toute sa longueur à l'exception des chemins de roulement 6 et 7 peut être usiné facilement. La finition peut être effectuée en une seule opération sur une machine de rectification et permet d'obtenir en grande série et à faible coût des portées de frottement des joints d'étanchéité et le chemin de glissement de petit diamètre 21 pour la came 19 de la roue libre 5.

La roue libre 5 comprend également une cage 22 présentant en coupe transversale une section en U à courtes branches inégales avec une pluralité de fenêtres ménagées dans la partie principale axiale et formant logement pour les cames 19. La roue libre 5 comporte en outre un ressort de rappel 23 monté à l'intérieur de la cage 22 et présentant une forme de bande métallique comportant également des alvéoles correspondant à celles de la cage 22 pour pouvoir y disposer les cames 19. Le ressort 23 est pourvu d'au moins une languette 24 par came 19 prévue pour appuyer sur une surface ménagée à cet effet sur la came 19 et exercer ainsi un couple de basculement tendant à maintenir les cames 19 en contact avec les chemins de glissement 20 et 21.

La roue libre 5 assure ainsi un accouplement unidirectionnel entre la poulie 2 et l'arbre 3. La roue libre 5 est disposée de telle sorte qu'en régime stabilisé ou en accélération du moteur du véhicule ladite roue libre fonctionne en prise de couple et transmet un couple d'entraînement entre la poulie 2 et l'arbre 3.

Au contraire, en cas de décélération rapide du moteur, la roue libre ne transmet plus de couple et permet temporairement un déplacement relatif en rotation de la poulie par rapport à l'arbre.

En outre, un joint d'étanchéité 25 est monté dans la rainure 2e de la poulie 2 et vient former une étanchéité avec la surface extérieure 3a de l'arbre 3. Le joint d'étanchéité 25 est disposé entre la surface frontale 2g et l'alésage 2c avec montage à force dans la rainure 2e qui présente, en coupe axiale, une concavité voisine de l'alésage 2c et une protubérance dirigée vers l'intérieur et voisine de la surface frontale 2g. Le joint d'étanchéité 25 peut être du type labyrinthe ou encore, comme représenté sur la figure 1, à lèvre frottant sur ladite surface extérieure 3a. L'étanchéité de la roue libre 5 est assurée du côté extérieur par ledit joint 25 et du côté du palier à roulement 4 par le joint 18 dudit palier à roulement 4. La roue libre 5 bénéficie ainsi d'une protection contre l'intrusion des éléments étrangers et peut être lubrifiée avec un lubrifiant spécifiquement prévu pour un bon fonctionnement de ladite roue libre 5, indépendamment du lubrifiant utilisé pour les roulements qui peut être différent.

Le positionnement axial de la roue libre 5 peut être assuré par des anneaux élastiques 27, par exemple de type circlips, coopérant avec la poulie 2.

Le dispositif de poulie débrayable peut être modulaire en ce sens que pour un même ensemble d'élément intérieur de transmission 3, de palier à roulement 4 et de roue libre 5, on peut prévoir différents diamètres extérieurs de poulie 2. En outre, la durée de vie du palier à roulement 4 est accrue en raison de l'application de la charge radiale exercée par la courroie qui s'effectue au droit des chemins de roulement en raison de l'alignement dans le sens axial du palier à roulement 4 et de la zone rainurée 2a de la poulie 2. Les plans de symétrie du palier 4 et de la zone rainurée 2a peuvent être confondus.

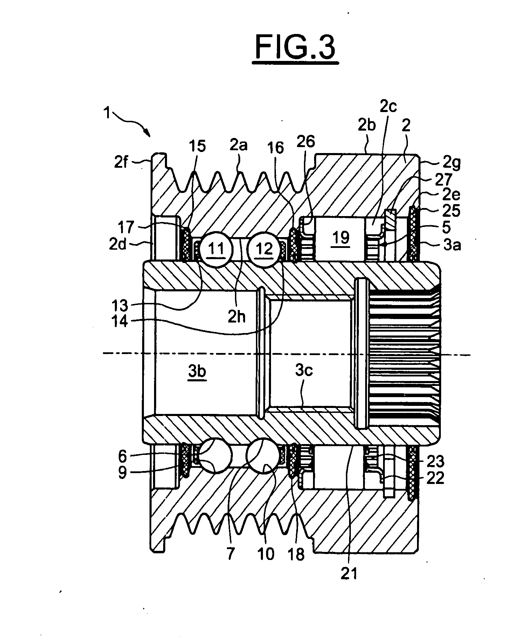

Dans le mode de réalisation illustré sur la figure 3, la bague extérieure 8 du palier à roulement 4 et la poulie 2 sont réalisées de façon monobloc. La poulie 2 présente un alésage étagé avec une partie de petit diamètre 2h à partir de laquelle sont ménagés les chemins de roulement 9 et 10 pour les éléments roulants 11 et 12 et les rainures 15 et 16 pour les joints 17 et 18. L'alésage de la poulie 2 présente également une partie de grand diamètre 2c dont une partie forme le chemin de glissement 20 pour les cames 19. La roue libre 5 peut être disposée entre un épaulement 26 formé entre la partie de petit diamètre 2g et la partie de grand diamètre 2c de l'alésage de la poulie 2 et un circlips 27 monté dans une rainure ménagée dans la partie de grand diamètre 2c de l'alésage de la poulie 2. Le circlips 27 peut être disposé axialement entre la cage 22 de la roue libre 5 et le joint d'étanchéité 25. Le positionnement axial de la roue libre est ainsi assuré par les circlips 27 et l'épaulement 26.

Avantageusement, les traitements thermiques des chemins de roulement et des chemins de la roue libre sont effectués pendant la même opération. Avantageusement, la rectification des chemins de roulement et des chemins de roue libre de la poulie peuvent être effectués durant la même opération. Pour un même sous-ensemble, élément intérieur de transmission 3, éléments roulants 11 et 12, cages 13 et 14 et joints d'étanchéité 17 et 18, on peut prévoir des poulies 2 de tailles différentes suivant les applications envisagées. On peut également prévoir des poulies 2 de diamètres extérieurs différents tout en conservant la même roue libre 5. Le nombre d'éléments à fabriquer et à manipuler est particulièrement faible et la possibilité d'utiliser des lubrifiants différents pour les éléments roulants et pour les cames de roue libre est assurée par la présence du joint d'étanchéité 18 disposé entre les éléments roulants 11 et 12 d'un côté et les cames 19 de l'autre côté.

Le mode de réalisation illustré sur la figure 3 convient particulièrement à des poulies de diamètre extérieur réduit, dans la mesure où la zone 2a rainurée de type poly-V sur l'extérieur de la poulie 2 peut présenter un diamètre inférieur à la zone 2b disposée au droit de la roue libre 5. La zone 2a rainurée peut présenter un diamètre égal ou inférieur au diamètre de l'alésage 2c de la poulie 2. Par ailleurs, le palier à roulement proprement dit est disposé sous la zone chargée radialement de la poulie tandis que la roue libre est située en dehors de cette zone. Le palier à roulement est donc particulièrement bien disposé pour reprendre la charge radiale tandis que la roue libre assurera la transmission unidirectionnelle d'un couple.

## Revendications

1. Dispositif (1) de poulie débrayable comprenant une poulie (2) montée sur un élément intérieur de transmission (3) au moyen d'un palier à roulement (4) et d'une roue libre (5) destinée à assurer un embrayage unidirectionnel entre la poulie (2) et l'élément intérieur de transmission (3), **caractérisé par le fait que** le palier à roulement (4) comprend deux rangées contigües d'éléments roulants (11, 12) disposés axialement d'un même côté de la poulie (2), la roue libre (5) étant disposée axialement à l'extérieur desdites rangées d'éléments roulants, du côté de la poulie (2) opposé à celui muni des deux rangées d'éléments roulants (11, 12).

2. Dispositif selon la revendication 1, dans lequel les éléments roulants (11, 12) sont des billes.

3. Dispositif selon la revendication 1 ou 2, dans lequel la roue libre (5) comprend des cames (19) engageantes.

4. Dispositif selon l'une quelconque des revendications précédentes, dans lequel l'élément intérieur de transmission (3) comprend un arbre possédant un profil extérieur cylindrique, au moins en-dehors de la zone de chemins de roulement intérieurs (6, 7) pour les éléments roulants (11, 12).

5. Dispositif selon l'une quelconque des revendications précédentes, dans lequel les chemins de roulement intérieurs (6, 7) sont formés directement sur l'élément intérieur de transmission (3).

6. Dispositif selon l'une quelconque des revendications précédentes, dans lequel les chemins de roulement extérieurs sont formés directement dans la poulie (2).

7. Dispositif selon l'une quelconque des revendications précédentes, dans lequel le chemin intérieur (21) de portée des cames (19) de roue libre (5) est formé sur l'élément intérieur de transmission (3).

8. Dispositif selon l'une quelconque des revendications précédentes, dans lequel le chemin extérieur (20) de portée des cames (19) est formé dans la poulie (2).

9. Dispositif selon l'une quelconque des revendications précédentes, dans lequel la poulie (2) est munie d'un alésage cylindrique (2c) dans lequel est emmanchée au moins une bague extérieure (8) du palier à roulement (4).

10. Dispositif selon l'une quelconque des revendications précédentes, dans lequel, la poulie (2) comprenant une surface extérieure (2a) prévue pour être en contact avec une courroie, les chemins de roulement (6, 7, 9, 10) étant localisés axialement au niveau de ladite surface de contact avec une courroie.

11. Dispositif selon l'une quelconque des revendications précédentes, dans lequel les chemins de roulement (6, 7, 9, 10) sont isolés de façon étanche de la roue libre (5).

12. Dispositif selon la revendication 11, comprenant un premier lubrifiant pour le roulement (4) et un deuxième lubrifiant pour la roue libre (5), les premier et deuxième lubrifiants étant différents.

13. Alternateur comportant un arbre et un dispositif de poulie débrayable suivant l'une quelconque des revendications précédentes, monté sur ledit arbre.

## Claims

1. Disengagable pulley device (1) comprising a pulley (2) mounted on an inner transmission element (3) by means of a rolling bearing (4) and of a freewheel (5) intended to provide a one-way coupling between the pulley (2) and the inner transmission element (3), **characterized in that** the rolling bearing (4) comprises two contiguous rows of rolling elements (11, 12) positioned axially on one same side of the pulley (2), the freewheel (5) being positioned axially on the outside of the said rows of rolling elements on the opposite side of the pulley (2) to the side equipped with the two rows of rolling elements (11, 12).

2. Device according to Claim 1, in which the rolling elements (11, 12) are balls.

3. Device according to Claim 1 or 2, in which the freewheel (5) comprises engaging cams (19).

4. Device according to any one of the preceding claims, in which the inner transmission element (3) comprises a shaft which has a cylindrical exterior profile, at least outside of the region of the inner raceways (6, 7) for the rolling elements (11, 12).

5. Device according to any one of the preceding claims, in which the inner raceways (6, 7) are formed directly on the inner transmission element (3).

6. Device according to any one of the preceding claims, in which the outer raceways are formed directly in the pulley (2).

7. Device according to any one of the preceding claims, in which the inner cam track (21) for the cams (19) of the freewheel (5) is formed on the inner transmission element (3).

8. Device according to any one of the preceding claims, in which the outer cam track (20) for the cams (19) is formed in the pulley (2).

9. Device according to any one of the preceding claims, in which the pulley (2) is equipped with a cylindrical bore (2c) into which at least one outer ring (8) of the rolling bearing (4) is push-fitted.

10. Device according to any one of the preceding claims in which, with the pulley (2) comprising an outer surface (2a) designed to be in contact with a belt, the raceways (6, 7, 9, 10) are located axially level with the said belt-contact surface.

11. Device according to any one of the preceding claims, in which the raceways (6, 7, 9, 10) are sealed off from the freewheel (5).

12. Device according to Claim 11, comprising a first lubricant for the rolling bearing (4) and a second lubricant for the freewheel (5), the first and second lubricants being different.

13. Alternator comprising a shaft and a disengagable pulley device according to any one of the preceding claims mounted on the said shaft.

## Patentansprüche

1. Vorrichtung (1) mit einer auskuppelbaren Riemenscheibe, die eine Riemenscheibe (2) aufweist, die auf einem inneren Antriebselement (3) mittels eines Wälzlagers (4) und einem Freilauf (5) montiert ist, der dazu bestimmt ist, zwischen der Riemenscheibe (2) und dem inneren Antriebselement (3) eine Mitnahme in einer Richtung sicherzustellen, **dadurch gekennzeichnet, dass** das Wälzlager (4) zwei nebeneinander liegende Reihen Wälzkörper (11, 12) aufweist, die axial auf einer gleichen Seite der Riemenscheibe (2) angeordnet sind, wobei der Freilauf (5) axial auf der Außenseite der zwei Reihen Wälzkörper auf derjenigen Seite der Riemenscheibe (2) angeordnet ist, die der mit den zwei Reihen Wälzkörpern (11, 12) ausgestatteten Seite gegenüberliegt.

2. Vorichtung nach Anspruch 1, bei welcher die Wälzkörper (11, 12) Kugeln sind.

3. Vorrichtung nach Anspruch 1 oder 2, bei welcher der Freilauf (5) eingreifende Nocken (19) aufweist.

4. Vorrichtung nach einem der vorhergehenden Ansprüche, bei welcher das innere Antriebselement (3) aufweist, die wenigstens außerhalb des Bereiches von inneren Laufbahnen (6, 7) für die Wälzkörper (11; 12) ein zylindrisches Außenprofil besitzt.

5. Vorrichtung nach einem der vorhergehenden Ansprüche, bei welcher die inneren Laufbahnen (6, 7) unmittelbar an dem inneren Antriebselement (3) ausgebildet sind.

6. Vorrichtung nach einem der vorhergehenden Ansprüche, bei welcher die äußeren Laufbahnen unmittelbar an der Riemenscheibe (2) ausgebildet sind.

7. Vorrichtung nach einem der vorhergehenden Ansprüche, bei welcher die Innenbahn (21) zum Halten der Nocken (19) des Freilaufes an dem inneren Antriebselement (3) ausgebildet ist.

8. Vorrichtung nach einem der vorhergehenden Ansprüche, bei welcher die Außenbahn (20) zum Halten der Nocken (19) an der Riemenscheibe (2) ausgebildet ist.

9. Vorrichtung nach einem der vorhergehenden Ansprüche, bei welcher die Riemenscheibe (2) mit einer zylindrischen Bohrung (2c) versehen ist, in welche wenigstens ein Außenring (8) des Wälzlagers (4) eingepresst ist.

10. Vorrichtung nach einem der vorhergehenden Ansprüche, bei welcher die Riemenscheibe (2a) aufweist, die zum Kontakt mit einem Riemen vorgesehen ist, wobei die Laufbahnen (6, 7, 9, 10) axial auf dem Niveau dieser Kontaktfläche mit einem Riemen angeordnet sind.

11. Vorrichtung nach einem der vorhergehenden Ansprüche, bei welcher die Laufbahnen (6, 7, 9, 10) zu dem Freilauf (5) hermetisch abgedichtet sind.

12. Vorrichtung nach Anspruch 11, die ein erstes Schmiermittel für das Lager (4) und ein zweites Schmiermittel für den Freilauf (5) besitzt, wobei das erste und das zweite Schmiermittel unterschiedlich sind.

13. Generator mit einer Welle und einer Vorrichtung mit einer auskuppelbaren Riemenscheibe nach einem der vorhergehenden Ansprüche, die auf der Welle montiert ist.
